(19) Europäisches Patentamt / European Patent Office / Office européen des brevets

(11) **EP 1 705 636 B1**

(12) **EUROPEAN PATENT SPECIFICATION**

(45) Date of publication and mention
of the grant of the patent:
**18.08.2010   Bulletin 2010/33**

(51) Int Cl.:
***G09G 3/36*** (2006.01)

(21) Application number: **06005529.0**

(22) Date of filing: **17.03.2006**

(54) **Display apparatus and display method**

Anzeigevorrichtung und Anzeigeverfahren

Appareil et procédé d'affichage

(84) Designated Contracting States:
**DE FR GB**

(30) Priority:  **24.03.2005   JP 2005087102**
**22.06.2005   JP 2005182365**
**16.11.2005   JP 2005331981**

(43) Date of publication of application:
**27.09.2006   Bulletin 2006/39**

(73) Proprietor: **Sony Corporation**
**Minato-ku**
**Tokyo (JP)**

(72) Inventors:
• **Kimura, Kazuto**
**Shinagawa-ku**
**Tokyo (JP)**
• **Masuda, Shozo**
**Shinagawa-ku**
**Tokyo (JP)**
• **Hayashi, Masatake**
**Shinagawa-ku**
**Tokyo (JP)**

(74) Representative: **Müller - Hoffmann & Partner**
**Patentanwälte**
**Innere Wiener Strasse 17**
**81667 München (DE)**

(56) References cited:
**US-A1- 2002 075 277     US-B1- 6 177 915**

• **RAMAN N ET AL: "Dynamic contrast enhancement of liquid crystal displays with backlight modulation" 2005 DIGEST OF TECHNICAL PAPERS. INTERNATIONAL CONFERENCE ON CONSUMER ELECTRONICS (IEEE CAT. NO.05CH37619) IEEE PISCATAWAY, NJ, USA, 2005, pages 197-198, XP002389416 ISBN: 0-7803-8838-0**
• **NAEHYUCK CHANG ET AL: "DLS: dynamic backlight luminance scaling of liquid crystal display" IEEE TRANSACTIONS ON VERY LARGE SCALE INTEGRATION (VLSI) SYSTEMS IEEE USA, vol. 12, no. 8, August 2004 (2004-08), pages 837-846, XP002389417 ISSN: 1063-8210**
• **WEI-CHUNG CHENG ET AL: "Power minimization in a backlit TFT-LCD display by concurrent brightness and contrast scaling" IEEE TRANSACTIONS ON CONSUMER ELECTRONICS IEEE USA, vol. 50, no. 1, February 2004 (2004-02), pages 25-32, XP002389418 ISSN: 0098-3063**
• **PATENT ABSTRACTS OF JAPAN vol. 2003, no. 12, 5 December 2003 (2003-12-05) -& JP 2004 212503 A (CASIO COMPUT CO LTD), 29 July 2004 (2004-07-29)**

**Description**

BACKGROUND OF THE INVENTION

1. Field of the Invention

The present invention relates to a display apparatus and a display method suitable for use in, for example, a liquid crystal display device.

2. Description of the Related Art

In display apparatuses, for example, liquid crystal display devices, since pixels of a liquid crystal panel do not emit light by themselves, a backlight is disposed on the back surface of the liquid crystal panel to illuminate the back surface of the liquid crystal panel. Thus, an image can be displayed.

In known liquid crystal display devices, the backlight illuminates the entire display screen of a liquid crystal panel at a uniform intensity. By controlling the aperture ratio of each pixel of the liquid crystal panel to adjust the shielding of light emitted from the backlight, each portion of the display screen receives necessary luminance of light. Accordingly, for example, even when the entire display screen is dark, the backlight emits light substantially at its maximum intensity. This unnecessarily illuminating backlight increases the power consumption of a liquid crystal display device, which is a problem.

To solve such a problem of a liquid crystal display device having a backlight, for example, a method has been proposed for controlling the luminance of the entire backlight on the basis of display luminance information of the entire display screen.

Additionally, a method has been proposed for dividing the display screen into a plurality of regions in accordance with light sources of a backlight and individually controlling the luminance of the light sources in accordance with the required luminance for each divided region (refer to, for example, Japanese Unexamined Patent Application Publication No. 2004-212503).

As used herein, the term "emission luminance" refers to the luminance of light when the light is being emitted from a light source. The term "display luminance" refers to the luminance of light emitted from the light source when the light is passing through a display unit (display screen). This same definition is used throughout this specification.

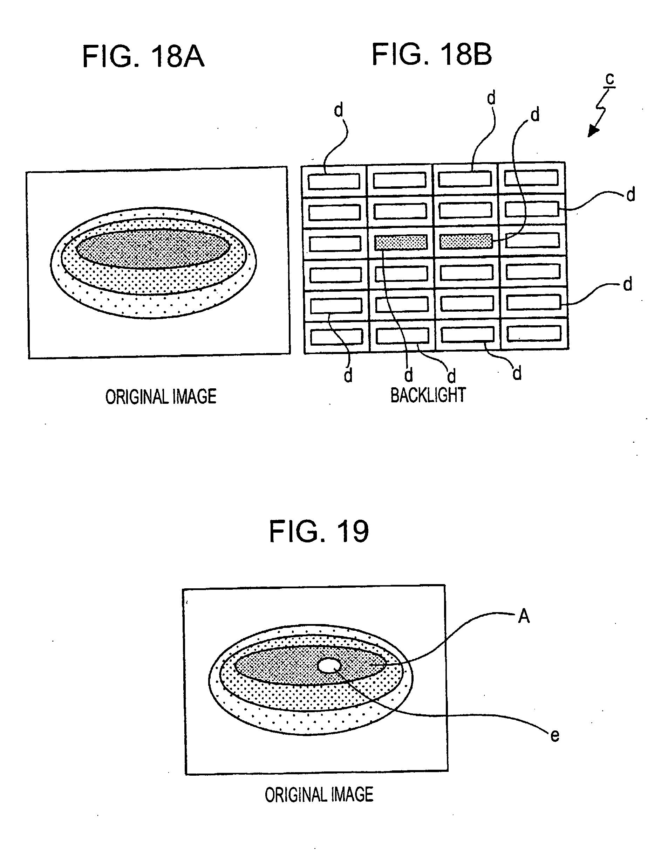

Figs. 18A and 18B schematically illustrate such a control method. For example, as shown in Fig. 18A, an image (original image) includes a dark elliptical portion substantially at the center of the image, and the image becomes progressively brighter towards the periphery thereof. A backlight c of a liquid crystal display device that displays this image includes a plurality of vertically and horizontally divided light sources d, d, d, ..., as shown in Fig. 18B. To display the image shown in Fig. 18A, the two light sources d and d corresponding to the portion having the lowest display luminance are controlled to decrease the emission luminance.

By displaying an image while partially controlling the emission luminance of the backlight c, the unnecessary backlight emission is prevented, and therefore, the power consumption can be reduced.

SUMMARY OF THE INVENTION

However, in the above-described individual control of light sources, the distribution of display luminance of the display screen is sometimes unequal to the distribution of emission luminance of the backlight. Thus, the original image could not be faithfully played back.

For example, in the partial control of the emission luminance of the backlight c shown in Figs. 18A and 18B, suppose that, as shown in Fig. 19, a portion A with a low luminance located at the center of the image contains a portion e with a high display luminance. Since the average luminance of the portion A is low, the emission luminance of the divided light sources d, d, d.... corresponding to the portion A is set to be low. Consequently, the portion e having a high display luminance cannot be displayed with a necessary display luminance, thereby decreasing the image quality.

RAMAN N et al. refers to a modulation of a backlight based on the video information in each field of a video signal. In this document neither the display unit is divided into a plurality of regions nor the backlight includes a plurality of sets of light sources, each set being disposed so as to correspond to one of the physical regions of the display screen.

A further known image display apparatus described in US 2002/075277 A1 includes a single backlight source, that is this known image display apparatus is constructed as a projector type image display apparatus.

A backlight part of a liquid crystal display device disclosed in the Japanese unexamined patent application, publication No. 2004-212503 as mentioned before is adapted to perform

1. an operation for irradiating the whole liquid crystal display panel with the irradiation light with constant luminosity and

2. an operation for irradiating a specified display area of the liquid display panel with the irradiation light with a bit rail luminosity while making the light emission luminance of the light emitting diode at a specified position different from that of a light emitting diode at an other position.

Further display apparatuses with a backlight illumination are respectively known from EP 1777693 (SONY CORPORATION, with the priority dates of October 18, 2005 and October 18, 2006 and published on April 25, 2007) and US 2005135097 (SHARP K. K. with priority date of July 19, 2001 and published on June 23. 2005) and respectively disclose that the backlight unit is divided by parti-tioning walls or plates different from the construction of the present display apparatus where backlights corresponding to each region are not partitioned by a partitioning wall so that the light of each backlight source reaches neighboring regions.

A further known display apparatus is disclosed in WO 2007/054865 (Koninklijke Philips Electronics N. V., priority date November 14, 2005 and having the international publication date May 18, 2007) and includes a backlight device including a first, second and third light source arrangement, wherein the first and second light source arrangements can be controlled to approximate the luminance of the third light source arrangement comprised in the backlight. Further, the luminance of each light source arrangement is controlled by means of a separate driver, that is each driver is associated with at least one light source arrangement comprised in the backlight. A luminance of the first and the second light source arrangements is associated with the first and the second portion respectively of the luminance profile of the third light source arrangement. The luminance of the first light source arrangement can then be controlled to provide a local approximation of the first portion of the third light source arrangement. Similarly the luminance of the second light source arrangement can be controlled to provide a local approximation of the second portion of the third light source arrangement. Consequently, the luminance of the first and second light source arrangement create an overall luminance profile which approximates the luminance profile of the third light source arrangement.

Accordingly, there is provided a display apparatus and a display method that solve the above-described problem to increase the quality of an image while reducing the power consumption.

According to an embodiment, the present invention provides a display apparatus comprising: a display unit having a display screen divided into a plurality of physical regions the display unit being controlled using an aperture ratio on a pixel-by-pixel basis; a backlight for illuminating the back surface' of the display unit, the backlight including a plurality of sets of light sources, each set of light sources being disposed so as to correspond to one of the physical regions wherein the light of each set of light sources also reaches regions other than the region immediately in front of the set of light sources and thereby contributes to the emission luminance in a region other than the region immediately in front of the set of light sources; and wherein in advance the contribution ratios of the emis-sion luminance of each set of light sources is measured and those data are stored in advance in a memory; and a control unit adapted for computing a distribution of display luminance over the physical regions of the display unit of one image to be displayed and generated from an image signal input to the control unit; setting by solving simultaneous equations the emission luminance of each light source as corresponding to each of the physical regions on the basis of the computed distri-bution of the display luminance with consideration of the contribution ratios of the emission luminance of each set of the light sources as previously stored in the memory and computing a correction value for each pixel of the display unit on the basis of a difference between the set emission luminance of each set of light sources and an optimal display luminance value for the physical regions of the display screen and delivering a display driving signal generated on the basis of the computed correction value to each pixel so as to control the aperture ratio of the pixel.

Accordingly, the emission luminance of a light source corresponding to one of the regions is computed while taking into account an effect on the region of the other light sources not corresponding to the region, and the aperture ratio of each pixel is controlled on the basis of the computed emission luminance. As a result, the emission luminance of the light sources is efficiently controlled and the power consumption is reduced while providing emission luminance required for every area of the display screen. Thus, the quality of an image can be increased.

According to a second aspect, the present invention provides a display method for use in a display apparatus, the display apparatus including a display unit having a display screen divided into a plurality of physical regions, the display unit being controlled using an aperture ratio on a pixel-by-pixel basis, and a backlight for illuminating the back surface of the display unit, the backlight including a plurality of sets of light sources, each set of light sources being disposed so as to corre-spond to one of the physical regions wherein the light of each set of light sources also reaches regions other than the region immediately in front of the light sources and thereby contributes to the emission luminance in the region other than the region immediately in front of the set of light sources; the method com-prising the steps of measuring in advance the contribution ratios of the emission luminance of each set of light sources and storing those data in advance; comput-ing a distribution of display luminance over the physical regions of the display unit of one image to be displayed and generated from an image signal input to the control unit; setting by solving simultaneous equations the emission luminance of each light source as corresponding to each of the physical regions on the basis of the computed distribution of the display luminance with consideration of the con-tribution ratios of the emission luminance of each set of the light sources as pre-viously stored in the memory and computing a correction value for each pixel of the display unit on the basis of a difference between the set emission luminance of each set of light sources and an optimal display luminance value for the physi-cal regions of the display screen and delivering a display driving signal generated on the basis of the computed correction value to each pixel so as to control the aperture ratio of the pixel.

BRIEF DESCRIPTION OF THE DRAWINGS

Fig. 1 is a block diagram of a liquid crystal display device for illustrating an embodiment of the best mode of the present invention together with Figs. 2 to 17;
Fig. 2 schematically illustrates a display unit and a backlight;
Fig. 3 is a graph illustrating the emission luminance of light sources at different positions in a display screen;
Fig. 4 is a graph illustrating the emission luminance of light sources at different positions in a display screen when taking into account the effect of reflection:
Fig. 5 is a graph illustrating the contribution ratios of the light sources to the luminance at different positions in the display screen;
Fig. 6 is a flow chart of a control procedure;
Fig. 7 is graphs illustrating the contribution ratios of light sources to the luminance, the recovery limits, and the emission ratios when a given image is displayed;
Fig. 8 is a graph illustrating the display luminance characteristic;
Figs. 9 and 10 illustrate the process of correcting luminance non-uniformity, where Fig. 9 is a graph illustrating the all-white display luminance and the uniform display luminance and Fig. 10 is a graph illustrating the uniform display luminance and the non-uniformity correction coefficient;
Figs. 11A-C are schematic diagrams illustrating the control of an image as compared with an example of a known control;
Fig. 12 is a graph illustrating the display luminance characteristic for increasing a dynamic range;
Fig. 13 is a flow chart of the control process to increase the dynamic range;
Fig. 14 is a block diagram of the structure of a different liquid crystal display device;
Fig. 15 is a front view schematically illustrating a display unit and a backlight of the different liquid crystal display device;
Fig. 16 is a graph illustrating the emission luminance of light sources at different positions in a display screen of the different liquid crystal display device;
Fig. 17 is a flow chart of the control procedure of the different liquid crystal display device;
Figs. 18A and 18B illustrate an example of an image and an example of the illumination state of a known backlight; and
Fig. 19 is an example of an image for illustrating a known drawback.

DESCRIPTION OF THE PREFERRED EMBODIMENTS

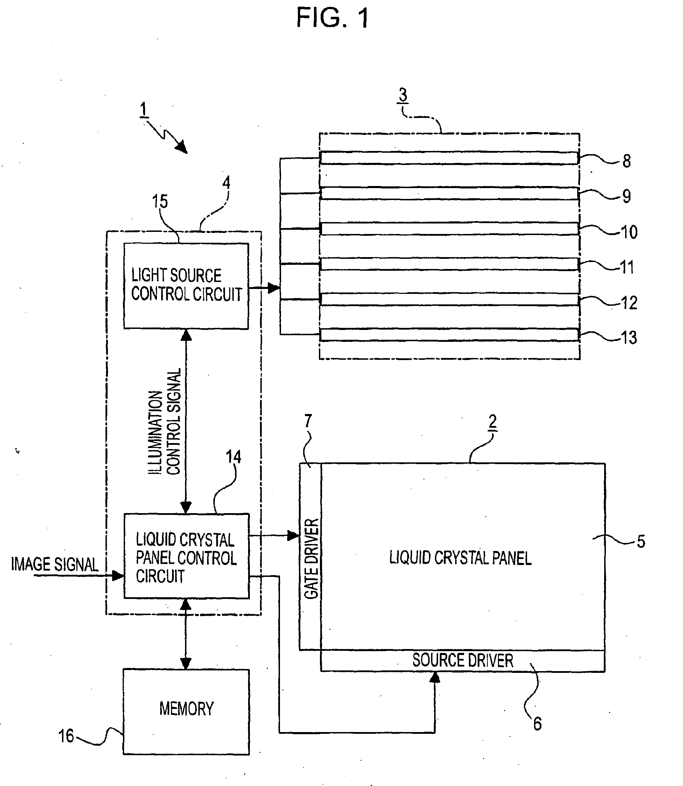

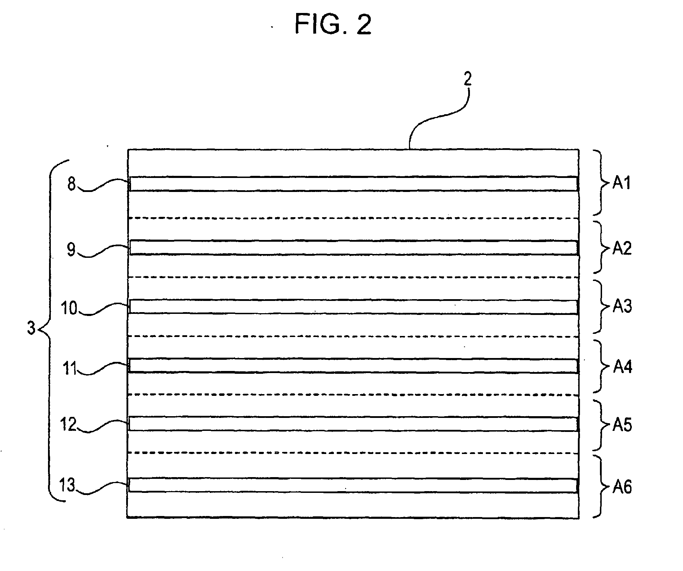

Exemplary embodiments of the present invention are now herein described with reference to Figs. 1 to 17.
In the following exemplary embodiments, a display apparatus of the exemplary embodiments is applied to a liquid crystal display device and a display method of the exemplary embodiments is applied to a method for displaying an image on the liquid crystal display device.
However, it should be appreciated that the present invention is not limited in this respect. The present invention can be applied to all the display apparatuses and all the display methods for displaying an image on the display apparatus in which a backlight is disposed on the back surface of a display unit of the display apparatus and an image is displayed by controlling the aperture ratio of a pixel of the display unit.
As shown in Fig. 1, a liquid crystal display device 1 includes a display unit 2 for displaying an image, a backlight 3 disposed on the back surface of the display unit 2, and a control unit 4 for controlling the backlight 3 and the display unit 2.
The display unit 2 includes a liquid crystal panel 5, a source driver 6, and a gate driver 7. The source driver 6 and the gate driver 7 deliver driving signals to the liquid crystal panel 5. The display screen of the liquid crystal panel 5 is divided into a plurality of regions; for example, six vertically divided regions A1 to A6, as shown in Fig. 2.
The backlight 3 includes a plurality of light sources, for example, six light sources 8 to 13. The light sources 8 to 13 are disposed immediately behind the six regions A1 to A6 of the display screen, respectively. Each of the light sources 8 to 13 includes a plurality of horizontally arranged light emitting elements (e.g., light emitting diodes).
For example, a red light emitting diode, a green light emitting diode, and a blue light emitting diode are employed as the light emitting diodes of each of the light sources 8 to 13. By arranging these light emitting diodes in a predetermined order, the light of these colors are mixed so as to generate a pure white light. The light emitted from each of the light sources 8 to 13 is diffused by a scatter plate or a scatter sheet (not shown) and is emitted onto the back side of the liquid crystal panel 5.

It is noted that each of the regions A1 to A6 is determined to receive not only light emitted from one of the light sources 8 to 13 disposed immediately therebehind but also light emitted from other regions. Accordingly, the light emitted from each of the light sources 8 to 13 reaches regions other than the region immediately in front of the light source by means of the scatter plate or the like, which is described below.

For the sake of simplicity, in the foregoing description, the backlight 3 includes only the vertically divided light sources 8 to 13. However, the backlight 3 may include only the horizontally divided light sources. Alternatively, the backlight 3 may include vertically and horizontally divided light sources, as illustrated in a known example of Fig. 18B.

As shown in Fig. 1, the control unit 4 includes a light source control circuit 15 for controlling the backlight 3 and a liquid crystal panel control circuit 14 for controlling the display unit 2. A memory 16 is connected to the liquid crystal panel control circuit 14.

The memory 16 stores data associated with a distribution of light emitted from the light sources 8 to 13 and incident on the liquid crystal panel 5. The memory 16 further stores data used to correct the luminance non-uniformity of the liquid crystal panel 5.

In the liquid crystal display device 1 having such a structure, upon receiving an image signal, the liquid crystal panel control circuit 14 generates a display driving signal for controlling the display of the liquid crystal panel 5 on the basis of the input image signal.

The generated display driving signal is delivered to the source driver 6 and the gate driver 7 of the liquid crystal panel 5. The source driver 6 and the gate driver 7 input the display driving signal to each pixel of the liquid crystal panel 5 in one field cycle in synchronization with a field cycle of the input image signal. When the display driving signal is input to each pixel of the liquid crystal panel 5, the following correction process is carried out.

The light source control circuit 15 controls each of the light sources 8 to 13 (see Fig. 1). When the liquid crystal panel control circuit 14 receives an image signal, the liquid crystal panel control circuit 14 inputs an illumination control signal for each of the light sources 8 to 13 into the light source control circuit 15 so that the emission luminance of the light sources 8 to 13 are independently set at one field cycle.

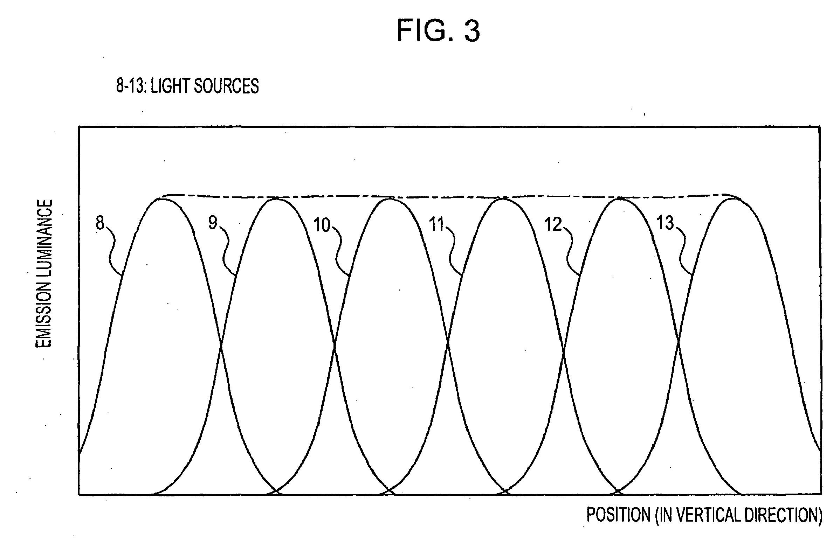

Fig. 3 illustrates an example of emission luminance of the light sources 8 to 13. In Fig. 3, the abscissa represents the vertical position in the display screen and the ordinate represents the emission luminance. Each of the light sources 8 to 13 is illuminated substantially at its maximum uniform luminance level.

In Fig. 3, the data represented by solid lines indicate the emission luminance of the light sources 8 to 13. Here, the effect of light reflected off either end of the display screen in the vertical direction (i.e., the ends of the light sources 8 and 13) is not taken into account in these data. The data represented by a dashed line indicates the total emission luminance of the light sources 8 to 13 at a location in the vertical direction. The total emission luminance at any point in the vertical direction is set to substantially the same with the exception of the total emission luminance at either end of the display screen in the vertical direction.

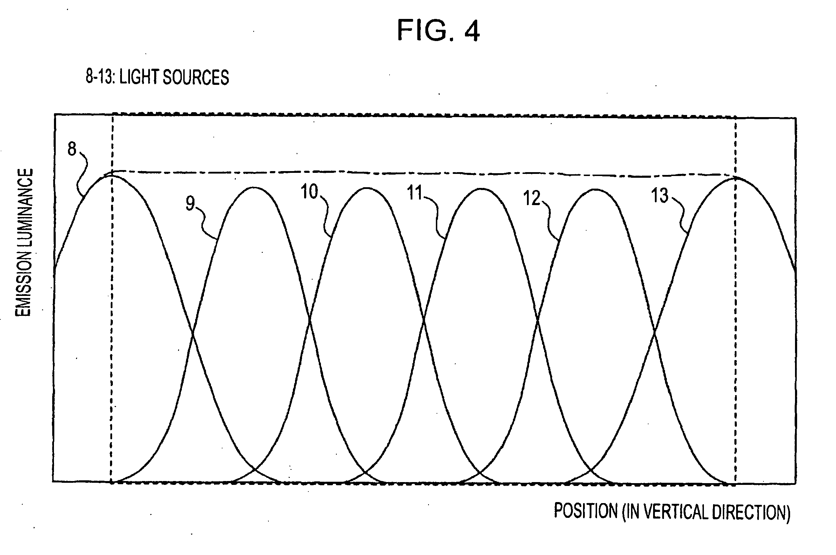

As described above, when the light sources 8 to 13 are illuminated substantially at the uniform intensity level, the total emission luminance decreases at either end of the display screen in the vertical direction. However, at either end of the display screen in the vertical direction, the emission luminance of the light sources 8 and 13 increases due to the effect of reflecting light (see Fig. 4). Accordingly, in the liquid crystal display device 1, the decrease in the total emission luminance is mitigated at either end of the display screen in the vertical direction.

Additionally, in the liquid crystal display device 1, in order to avoid the decrease in the total emission luminance at either end of the display screen in the vertical direction as much as possible, the maximum emission luminance of the light sources 8 and 13, which are located at either end of the display screen in the vertical direction, may be increased compared with that of the other light sources 9 to 12.

Furthermore, in order to completely avoid the decrease in the total emission luminance at either end of the display screen in the vertical direction, the area enclosed by a dotted line in Fig. 4 may be defined as an image displayable area, for example.

The liquid crystal display device 1 does not include a partition that prevents light emitted from each of the light sources 8 to 13 from reaching regions other than the region immediately in front of the light source. Accordingly, the light emitted from each of the light sources 8 to 13 reaches the regions other than the region immediately in front of the light source so as to contribute to the increase in the display luminance of those regions.

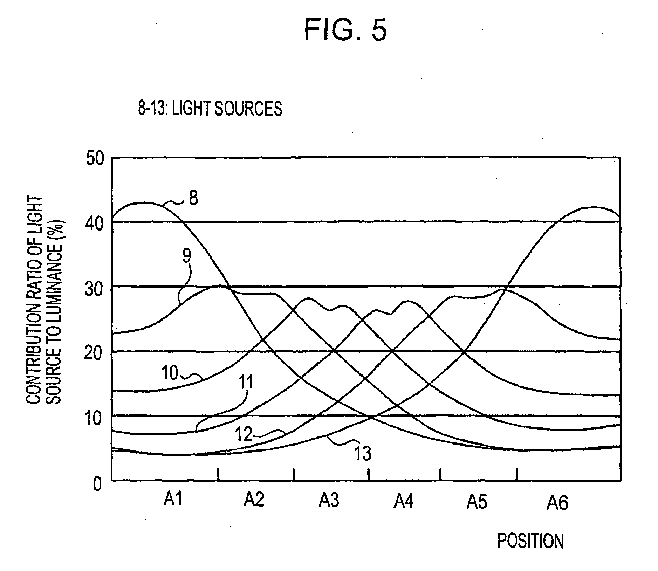

Fig. 5 illustrates the contribution ratios of the light sources 8 to 13 to the luminance at different positions in the display screen when the light sources 8 to 13 having the emission luminance shown in Fig. 4 are used and the light emitted from the light sources 8 to 13 is incident on the liquid crystal panel 5. In Fig. 5, the abscissa represents the vertical position on the display screen and the ordinate represents the contribution ratios of the light emitted from the light sources 8 to 13 to the display luminance.

As can be seen from Fig. 5, the contribution ratios of light emitted from the light sources 8 to 13 are the highest to the luminance in the regions A1 to A6 located immediately in front of the light sources 8 to 13, respectively. The contribution ratio gradually decreases with distance from each of the regions A1 to A6. The contribution ratio of the light sources 8 and 13 disposed at either end in the vertical direction to the luminance in the regions A1 and A6 located immediately in front of the light sources 8 and 13 is about 40%, while the contribution ratio of the light sources 9 and 12 located between the light sources 8 and 13 to the luminance in the regions A2 and A5 located immediately in front of the light sources 9 and 12 is about 30%. Additionally, each of the light sources 8 to 13 also contributes to the luminance in a region other than the region immediately in front of the light source.

As described above, in the liquid crystal display device 1, the light emitted from each of the light sources 8 to 13 also reaches regions other than the region immediately in front of the light source. Therefore, light is emitted from each of the light sources 8 to 13 onto not only one of the regions A1 to A6 immediately in front of the light source but also the other regions.

In the liquid crystal display device 1, the contribution levels of the emission luminance of each of the light sources 8 to 13 to the regions A1 to A6 are measured in advance and are stored in the memory 16. These measurement values are used for solving simultaneous equations, which are described below. That is, the memory 16 stores data of the contribution ratio to the luminance shown in Fig. 5.

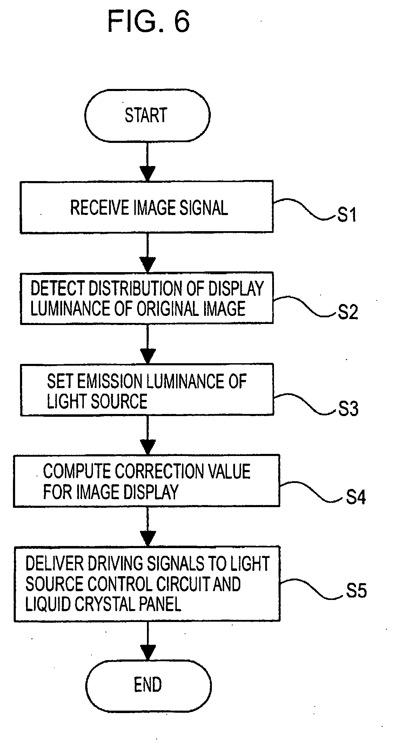

The control process of the screen display is now herein described with reference to a flow chart shown in Fig. 6. This process is executed by the liquid crystal panel control circuit 14 and the light source control circuit 15 of the control unit 4 every time a one-field image signal is input to the liquid crystal panel control circuit 14.

Upon receiving a one-field image signal (step S1), the liquid crystal panel control circuit 14 detects the distribution of display luminance of one image (original image) generated from the input image signal (step S2). Accordingly, display luminance in each of the regions A1 to A6, for example, an average display luminance in each region is detected.

On the basis of the detected distribution of display luminance, the emission luminance is set for each of the light sources 8 to 13 of the backlight 3 (step S3). The display luminance is set with consideration of the contribution ratios of the emission luminance of each of the light sources 8 to 13 to the display luminance of the regions A1 to A6. More specifically, by using simultaneous equations and the above-described data about the contribution ratios prestored in the memory 16 (see Fig. 5), the emission luminance of each of the light sources 8 to 13 is set. An example of the simultaneous equations is described later.

After the emission luminance of each of the light sources 8 to 13 is set as described above, a correction value for each pixel is computed to obtain an optimal display luminance value when the image is displayed on the display screen of the liquid crystal panel 5 (step S4).

The correction value is computed on the basis of a difference between the set emission luminance of each of the light sources 8 to 13 and the optimal value. The optimal value refers to display luminance required for each region of the display screen when an original image is displayed on the basis of an input image signal. Accordingly, the correction value is a value for computing the aperture ratio of each pixel to obtain the display luminance required for each location on the display screen when light is emitted from the light sources 8 to 13 at the emission luminance level set as described above.

To compute the correction value, the data for correcting the luminance non-uniformity of the liquid crystal panel 5 is read out of the memory 16. Thereafter, the correction value is computed using these data.

Subsequently, the light source control circuit 15 delivers light emission driving signals in accordance with the emission luminance of the light sources 8 to 13 set at step S3 to the light sources 8 to 13, respectively. Thus, the light sources 8 to 13 emit light at the set emission luminance levels. At the same time, the liquid crystal panel control circuit 14 delivers, to pixels of the liquid crystal panel 5, display driving signals corrected on the basis of the correction values computed at step S4. Thus, an image of each field is displayed on the display screen (step S5). When the display driving signals are delivered from the liquid crystal panel control circuit 14 to the pixels of the liquid crystal panel 5, the pixels are controlled so that the aperture ratios of the pixels equal to the aperture ratios defined by the display driving signals. Thus, the transmission of light emitted from the light sources 8 to 13 through the pixels is controlled.

As a result, the image is displayed while maintaining the display luminance in accordance with the input image signal in each region of the display screen.

The controls carried out at steps S1 to S5 (see Fig. 6) are now herein described in detail.

Let N be the number of light sources of the backlight 3 (N is an integer greater than or equal to 2). In this embodiment, N = 6.

In the liquid crystal display device 1, as shown in Fig. 2, the display screen is divided into six regions A1 to A6, which correspond to the N divided light sources.

For each of the regions A1 to A6, the maximum display luminance $L_{n\_max}$ (n = 1, ... 6) determined by the input image signal is computed. The maximum display luminance $L_{n\_max}$ refers to the value of a maximum display luminance in each of the regions A1 to A6.

Here, let $L\_peak$ be the all-white display luminance (i.e., a white peak setting is applied to both the liquid crystal panel and the backlight; in general, the aperture ratio of a liquid crystal panel is set to 100% and the output of the backlight is set to 100%). Let $\alpha_n$ be the ratio of the maximum display luminance $L_{n\_max}$ to the all-white display luminance $L\_peak$. Then, the ratio $\alpha_n$ (n = 1, ... 6) is computed for each of the regions A1 to A6 of the display screen.

That is,

$$\alpha n = (Ln\_max/L\_peak) \qquad \cdots (1)$$

The ratio $\alpha n$ represents how many percent of the emission luminance of the light sources 8 to 13 corresponding to the regions A1 to A6 can be reduced by (the recovery limit). That is, the display luminance of the liquid crystal panel 5 is determined by the aperture ratio of a liquid crystal panel (including a polarizer) multiplied by the emission luminance of the backlight. The term "recovery limit" refers to a minimum value that can provide the maximum display luminance Ln_max when the aperture ratio of the liquid crystal panel is set to 100%.

In the foregoing description, the recovery limit $\alpha n$ is computed on the basis of the maximum display luminance Ln_max for each of the regions A1 to A6. However, depending on the displayed image, an average display luminance Ln_ave of each of the regions A1 to A6 may be obtained to compute a recovery limit $\alpha n'$ using the following equation: $\alpha n' = (Ln\_ave/L\_peak)$. Using this value, the luminance control can be carried out. In this case, it is difficult to reconstruct a complete original image. However, it is possible to reconstruct the original image with few discernible defects.

As described above, the display luminance of each of the regions A1 to A6 is effected by not only the emission luminance of one of the light sources 8 to 13 immediately behind the regions A1 to A6 but also the emission luminance of the other light sources 8 to 13. Accordingly, simply by controlling the emission luminance of each of the light sources 8 to 13 immediately behind the regions A1 to A6 in accordance with the recovery limits $\alpha n$ of the regions A1 to A6, the control cannot be carried out in consideration of the emission luminance of the light sources 8 to 13 that are not located immediately behind the regions A1 to A6.

Therefore, the emission ratio $\beta n$ (n = 1, ... 6) is computed in consideration of the emission luminance of the light sources 8 to 13 that are not located immediately behind the regions A1 to A6. The emission ratio $\beta n$ refers to a ratio of the actual emission luminance of one of the light sources 8 to 13 to the maximum emission luminance thereof (i.e., the emission luminance when the white peak is set). The emission ratio $\beta n$ is in the range of $0 \leq \beta n \leq 1$.

The emission ratio $\beta n$ is computed using the contribution ratio $K_{X, Y}$ of each of the light sources 8 to 13 to the luminance of one of the regions A1 to A6 (see Fig. 5). As described above, the data of the contribution ratio of each of the light sources 8 to 13 to the luminance is prestored in the memory 16 and is read out of the memory 16 when the emission ratio $\beta n$ is computed.

In the contribution ratio $K_{X, Y}$, X represents one of the regions A1 to A6 and Y represents one of the light sources 8 to 13. For example, $K_{1, 1}$ represents the contribution ratio of the light source 8 located at the top to the luminance of the region A1. $K_{2, 3}$ represents the contribution ratio of the light source 10 located at the third from the top to the luminance of the region A2. As shown in Fig. 5, the contribution ratio of each of the light sources 8 to 13 is not constant in each area. However, in the memory 16, the contribution ratio $K_{X, Y}$ is stored as the value at the middle of each of the regions A1 to A6.

The emission ratio $\beta n$ can be computed by solving the following multiple simultaneous equations (inequality expressions):

$$K_{1,\,1}\cdot\beta_1 + K_{1,\,2}\cdot\beta_2 + K_{1,\,3}\cdot\beta_3 + K_{1,\,4}\cdot\beta_4 + K_{1,\,5}\cdot\beta_5 K_{1,\,6}\cdot\beta_6 \geq \alpha_1 \qquad \cdots (2)$$

$$K_{2,\,1}\cdot\beta_1 + K_{2,\,2}\cdot\beta_2 + K_{2,\,3}\cdot\beta_3 + K_{2,\,4}\cdot\beta_4 + K_{2,\,5}\cdot\beta_5 K_{2,\,6}\cdot\beta_6 \geq \alpha_2 \qquad \cdots (3)$$

$$K_{3,\,1}\cdot\beta_1 + K_{3,\,2}\cdot\beta_2 + K_{3,\,3}\cdot\beta_3 + K_{3,\,4}\cdot\beta_4 + K_{3,\,5}\cdot\beta_5 K_{3,\,6}\cdot\beta_6 \geq \alpha_3 \qquad \cdots (4)$$

$$K_{4,\,1}\cdot\beta_1 + K_{4,\,2}\cdot\beta_2 + K_{4,\,3}\cdot\beta_3 + K_{4,\,4}\cdot\beta_4 + K_{4,\,5}\cdot\beta_5 K_{4,\,6}\cdot\beta_6 \geq \alpha_4 \qquad \cdots (5)$$

$$K_{5,\,1}\cdot\beta_1 + K_{5,\,2}\cdot\beta_2 + K_{5,\,3}\cdot\beta_3 + K_{5,\,4}\cdot\beta_4 + K_{5,\,5}\cdot\beta_5 K_{5,\,6}\cdot\beta_6 \geq \alpha_5 \qquad \cdots (6)$$

$$K_{6,\,1}\cdot\beta_1 + K_{6,\,2}\cdot\beta_2 + K_{6,\,3}\cdot\beta_3 + K_{6,\,4}\cdot\beta_4 + K_{6,\,5}\cdot\beta_5 K_{6,\,6}\cdot\beta_6 \geq \alpha_6 \qquad \cdots (7)$$

After computing the emission ratio $\beta n$ ($0 \leq \beta n \, s \, 1$) by solving the multiple simultaneous equations, the emission luminance of each of the light sources 8 to 13 is set so as to satisfy the computed emission ratio $\beta n$.

It should be noted that since, in the above-described multiple simultaneous equations, only n changes in accordance with the number of divided backlights, the simultaneous equations can be used regardless of the structure of a backlight.

Additionally, in the foregoing description, βn is computed for each of the light sources 8 to 13. However, βn may be computed, for example, for each of primitive colors (i.e., red, green, and blue) or for each emission color of the backlight 3 to control the luminance.

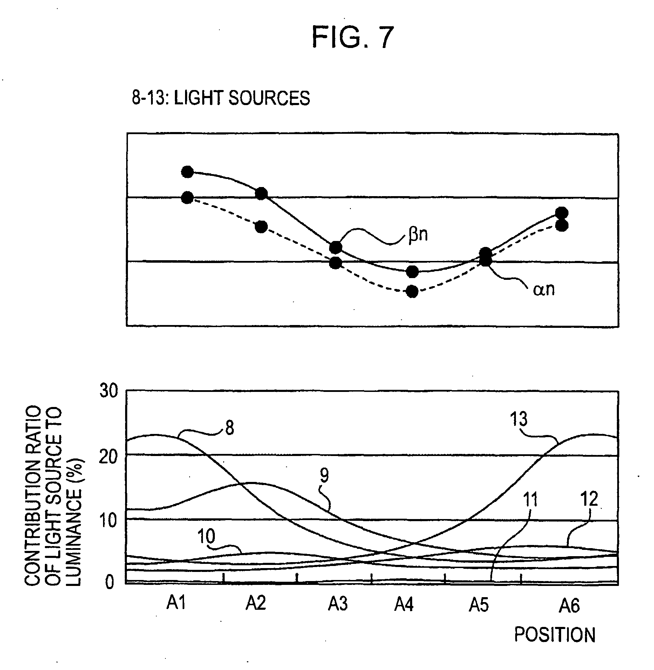

Fig. 7 is graphs illustrating the luminance state when the emission ratio βn is computed in response to an input signal and the emission luminance of the light sources 8 to 13 of the backlight 3 is controlled using the above-described method.

In Fig. 7, the abscissa represents the location in the display screen in the vertical direction. In the upper graph, data at each point which are connected by a dotted curve represents the recovery limit αn, while data at each point which are connected by a solid curve represent the sum of the emission ratio βn of the light sources 8 to 13 in the regions A1 to A6. The lower graph represents the contribution ratios of the light sources 8 to 13 to the luminance.

In the example shown in Fig. 7, the display luminance of the region A4 is the lowest. The display luminance increases with distance from the region A4. The display luminance of the region A1 is the highest. The emission luminance of the light source 11 is near zero. The emission luminance of the light sources 10 and 12 is low. The emission luminance of the light sources 8, 9, and 13 is set to be higher than that of the light sources 10, 11, and 12.

As shown in Fig. 7, the emission ratio βn is set to a value close to the recovery limit αn, and therefore, the emission luminance of the light sources 8 to 13 is efficiently controlled.

As stated above, by solving the multiple simultaneous equations using the recovery limit αn and the contribution ratio $K_{X, Y}$, the emission ratios βn of the light sources 8 to 13 are obtained so as to control the emission luminance of the light sources 8 to 13. This method allows the emission luminance of the light sources 8 to 13 to be reduced in accordance with the display state of an image, and therefore, the power consumption of the backlight 3 can be reduced.

After the emission ratios βn is computed and the emission luminance of the light sources 8 to 13 is set in the above-described manner, the correction value for each pixel is computed to set the display luminance at each location in the display screen of the liquid crystal panel 5 to the optimal value when displaying an image. As described above, this correction value is a value for computing the aperture ratio of each pixel to obtain the display luminance required for each location of the display screen when light is emitted from the light sources 8 to 13 at the emission luminance level set in the above-described manner.

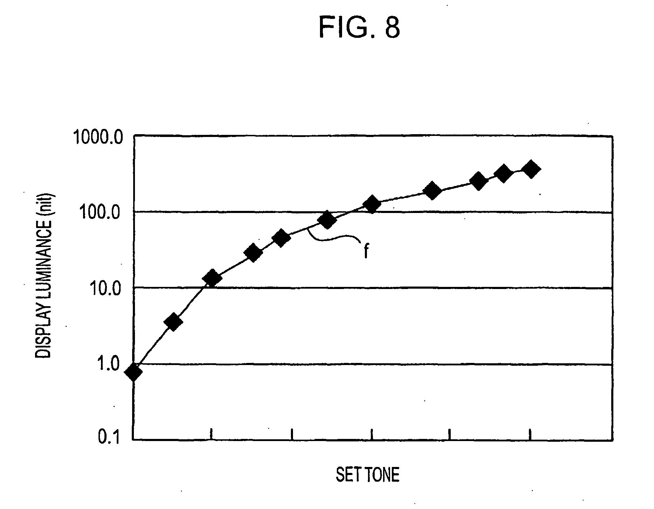

The correction value is computed on the basis of data about the display luminance characteristic of the liquid crystal panel 5 shown in Fig. 8. In Fig. 8, the abscissa represents a set tone (voltage) S_data of the liquid crystal panel 5 when the output of the backlight 3 is 100% (all lit) and the ordinate represents the display luminance L_data of the liquid crystal panel 5 for the set tone S_data. The data about the display luminance characteristic f shown in Fig. 8 is obtained in advance and are stored in the memory 16.

For each pixel, let y be the ratio of the all-white display luminance L_peak to a set display luminance L_set. The set display luminance L_set refers to display luminance when the aperture ratio of the pixel is set to 100% and light is emitted from the light sources 8 to 13 whose emission luminance is set on the basis of the emission ratios βn.

That is,

$$\gamma \; = \; \texttt{L\_peak/L\_set} \qquad \texttt{... (8)}$$

As described above, the set tone S_data of an image (original image) displayed when an image signal is input is determined by the display luminance L_data according to the data shown in Fig. 8.

That is,

$$\texttt{L\_data = f(S\_data)} \qquad \texttt{... (9)}$$

Additionally, a corrected set tone S_data' for the set display luminance L_set is computed using the following equation on the basis of the ratio y of the all-white display luminance L_peak to a set display luminance L_set and the set tone S_data. The corrected set tone S_data' is the correction value used to compute the aperture ratio required for each pixel.

That is,

$$S\_data' = f(\gamma \times L\_data)^{-1} \qquad \dots (10)$$

By setting the aperture ratio of each pixel to achieve the corrected set tone S_data', the original image can be played back at a predetermined display luminance level.

In the liquid crystal display device 1, when computing the correction value for each pixel, the following process is carried out to correct the luminance non-uniformity of the liquid crystal panel 5.

When the liquid crystal panel 5 is set to the all-white display luminance L_peak, the luminance non-uniformity appears on the liquid crystal panel 5. This luminance non-uniformity is caused by the molding precision of components associated with the display luminance of the liquid crystal panel 5 (e.g., a pixel (liquid crystal) and a light source).

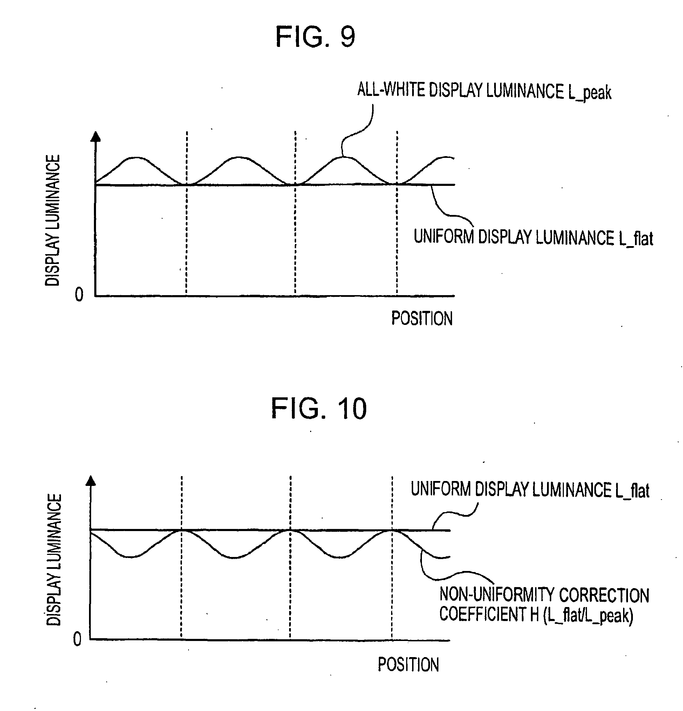

A method for preventing the luminance non-uniformity is now herein described with reference to Figs. 9 and 10.

As shown in Fig. 9, for the display luminance at each position in the display screen, let the minimum value of the all-white display luminance L_peak denote a uniform display luminance L_flat. At that time, if a particular location that exhibits low display luminance is found, the low display luminance may be ignored when determining the uniform display luminance L_flat.

Subsequently, for each pixel, a ratio H is computed that is a ratio of the uniform display luminance L_flat to the all-white display luminance L_peak (i.e., H = L_flat/L_peak). The ratio H is stored in the memory 16 as a non-uniformity correction coefficient.

Fig. 10 illustrates the non-uniformity correction coefficient H computed for the display luminance state shown in Fig. 9.

Thus, the non-uniformity correction coefficient H is computed. By computing the corrected set tone S_data' using the following equation including the non-uniformity correction coefficient H, the luminance non-uniformity of the liquid crystal panel 5 can be corrected:

$$S\_data' = f(H \times \gamma \times L\_data)^{-1} \qquad \dots (11)$$

As stated above, in the liquid crystal display device 1, by controlling the emission luminance of the light sources 8 to 13 and the aperture ratio of each pixel of the liquid crystal panel 5 in accordance with an input image signal, the quality of an image can be improved while reducing the power consumption.

Moreover, the emission luminance of the light sources 8 to 13 is independently controlled, and the light emitted from the light sources 8 to 13 is not partitioned. Accordingly, the structure can be similar to a simple structure of known liquid crystal display devices that do not carry out light amount control.

Furthermore, in the liquid crystal display device 1, the luminance non-uniformity of the liquid crystal panel 5 is corrected while controlling the emission luminance of the light sources 8 to 13 and the aperture ratio of each pixel of the liquid crystal panel 5. Accordingly, the image quality is further improved.

Still furthermore, in the liquid crystal display device 1, a single memory 16 stores different types of data including data used to correct the luminance non-uniformity of the liquid crystal panel 5, data about the distribution of light emitted from the light sources 8 to 13, and data about the contribution ratio that indicates how much the emission luminance of the light sources 8 to 13 contributes to the display luminance of the regions A1 to A6. Therefore, a plurality of memories for independently storing these data are not necessary. As a result, the control operation can be carried out without increasing the manufacturing cost.

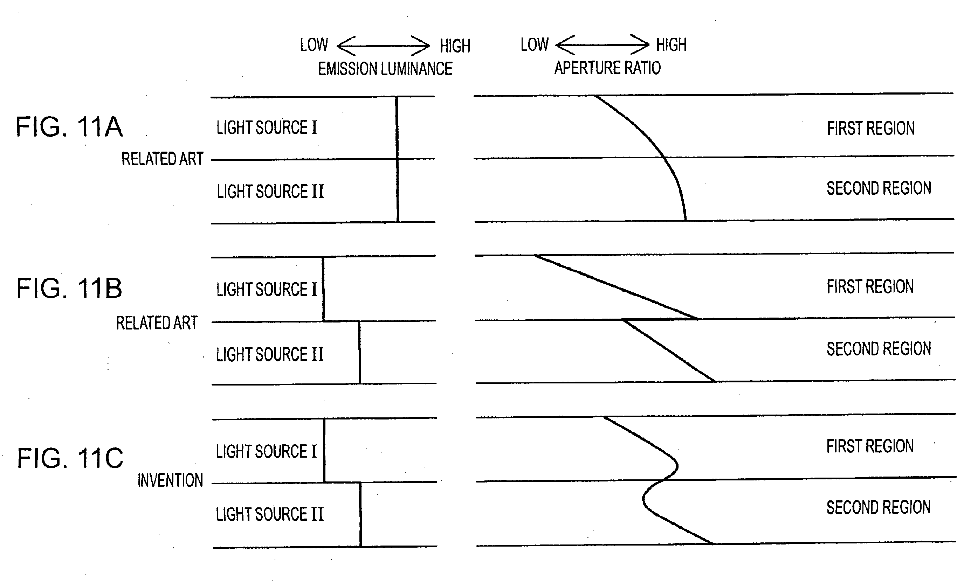

An example of a control according to the above-described method is now herein described with reference to Figs. 11A-C while comparing with a known control method. For the sake of simplicity, in Figs. 11A-C, the display screen is divided into only two regions (first and second regions). The display luminance of the first region is lower than that of the second region. Additionally, the display luminance gradually increases from the top to the bottom of the display screen composed of the first and second regions. In Fig. 11A-C, the left side represents the emission luminance of a light source while the right side represents the aperture ratio of a pixel. In Figs. 11A-C, the same image is displayed at the same display luminance level.

Fig. 11A illustrates an example of a known control method in which the emission luminance of a light source is set to be maximum and a predetermined display luminance is obtained by controlling the aperture ratio of a pixel.

In the example shown in Fig. 11A, since the emission luminance of a light source is set to be maximum at all times regardless of the required display luminance, the power consumption becomes high.

Fig. 11B illustrates an example of a known control method in which the emission luminance of a light source is set to be lower than the maximum luminance, the emission luminance of a light source I disposed immediately behind the first region is set to be lower than the emission luminance of a light source II disposed immediately behind the second region, and a predetermined display luminance is obtained by controlling the aperture ratio of a pixel. A partition is provided between the first region and the second region.

In the example shown in Fig. 11B, since the first region and the second region are partitioned and the light source I and the light source II are independently controlled, the aperture ratios of pixels in the border area between the first region and the second region significantly change. The significant change in the aperture ratios of pixels appears in the form of the luminance non-uniformity of a display caused by dependence of the luminance on the viewing angle when the display screen is viewed from an oblique direction.

Fig. 11C illustrates an example of the liquid crystal display device 1 according to an embodiment of the present invention, in which the emission luminance of a light source is set to be lower than the maximum luminance, the emission luminance of a light source I disposed immediately behind the first region is set to be lower than the emission luminance of a light source II disposed immediately behind the second region, and a predetermined display luminance is obtained by controlling the aperture ratio of a pixel. The emission luminance is equal to that in Fig. 11B. A partition is not provided between the first region and the second region.

In the example shown in Fig. 11C, since the first region and the second region is not partitioned and the light source I and the light source II are controlled in consideration of the effect of the light source I and the light source II on the entire display screen, the aperture ratios of pixels in the border area between the first region and the second region gradually change. Unlike the example shown in Fig. 11B, the gradual change in the aperture ratios of pixels does not generate the luminance non-uniformity of a display caused by dependence of the luminance on the viewing angle. Thus, the quality of an image can be increased.

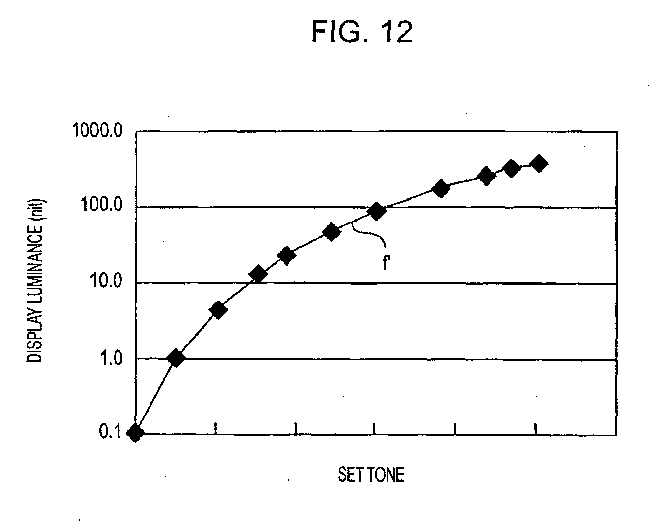

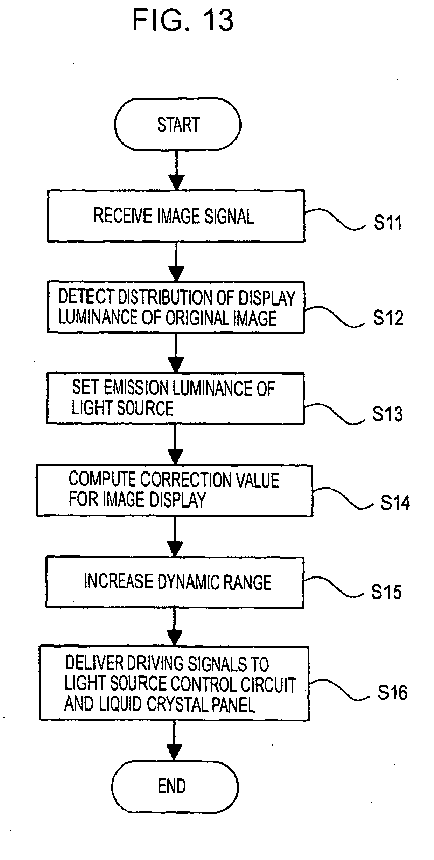

An example of a control in order to increase the dynamic range of a control amount of the display luminance of each of the light sources 8 to 13 and the dynamic range of a correction value for each pixel is now herein described with reference to Figs. 12 and 13.

In the foregoing description, the data shown in Fig. 8 is stored in the memory 16 as the data about the display luminance characteristic of the display screen. By using another type of data as the data about the display luminance characteristic of the display screen stored in the memory 16, the dynamic range can be increased.

The data shown in Fig. 8 is data having the display luminance characteristic f that represents a black color (black level) when the backlight 3 emits light. However, as shown in Fig. 12, data can be used that has a display luminance characteristic f' that represents a black color (black level) when the backlight 3 emits no light. By using such data, the dynamic range can be increased for the control amount of the display luminance of each of the light sources 8 to 13 and for the correction value for each pixel.

An example of a control process of a screen display in order to increase the dynamic range of a control amount of the display luminance of each of the light sources 8 to 13 and the dynamic range of a correction value for each pixel is now herein described with reference to a flow chart of Fig. 13. This control process is executed by the liquid crystal panel control circuit 14 and the light source control circuit 15 of the control unit 4 every time a one-field image signal is input to the liquid crystal panel control circuit 14.

First, processes at steps S11 through S13 are sequentially carried out. The processes at steps S11 through S13 are similar to the processes at steps S1 through S3 shown in Fig. 6.

Subsequently, a correction value for each pixel is computed to set the display luminance of each location in the display screen of the liquid crystal panel 5 to be an optimal value when displaying an image (step S14). To compute the correction value, the data having the display luminance characteristic f' shown in Fig. 12 is read out of the memory 16. By computing the correction value using the data having the display luminance characteristic f' shown in Fig. 12, the dynamic range can be increased for the control amount of the display luminance of each of the light sources 8 to 13 and for the correction value for each pixel (step S15).

Subsequently, the liquid crystal panel control circuit 14 delivers display driving signals corrected on the basis of the correction values computed at steps S14 and S15 to the pixels of the liquid crystal panel 5. Thus, an image of each field is displayed on the display screen (step S16). When the display driving signals are delivered from the liquid crystal panel control circuit 14 to the pixels of the liquid crystal panel 5, the pixels are controlled so that the aperture ratios of the pixels equal to the aperture ratios defined by the display driving signals. Thus, the transmission of light emitted from the light sources 8 to 13 through the pixels is controlled. The process at step S16 is similar to the process at step S5 shown in Fig. 6.

As described above, by increasing the dynamic range for the control amount of the display luminance of each of the light sources 8 to 13 and the correction value for each pixel, the quality of the image can be increased. This dynamic range increasing process can be carried out, for example, for each of primitive colors (i.e., red, green, and blue) or for each emission color of the backlight 3 to control the luminance.

In the foregoing description, in the liquid crystal display device 1, the display screen is divided into the six regions A1 to A6, and the six light sources 8 to 13 which respectively correspond to the six regions A1 to A6 are disposed to control the emission luminance. However, as in the following liquid crystal display device 1A, a plurality of light sources may be disposed for each of regions A1 to A6, and the emission luminance of the plurality of light sources disposed for each region may be controlled as one unit.

In the following description, the liquid crystal display device 1A is only different from the liquid crystal display device 1 in that a different number of light sources is disposed for one region and the emission luminance of a plurality of light sources is controlled as one unit. Accordingly, only the parts different from those of the liquid crystal display device 1 are described in detail. For the other parts, the same reference numerals are used to designate corresponding parts of the liquid crystal display device 1 and the descriptions are not repeated.

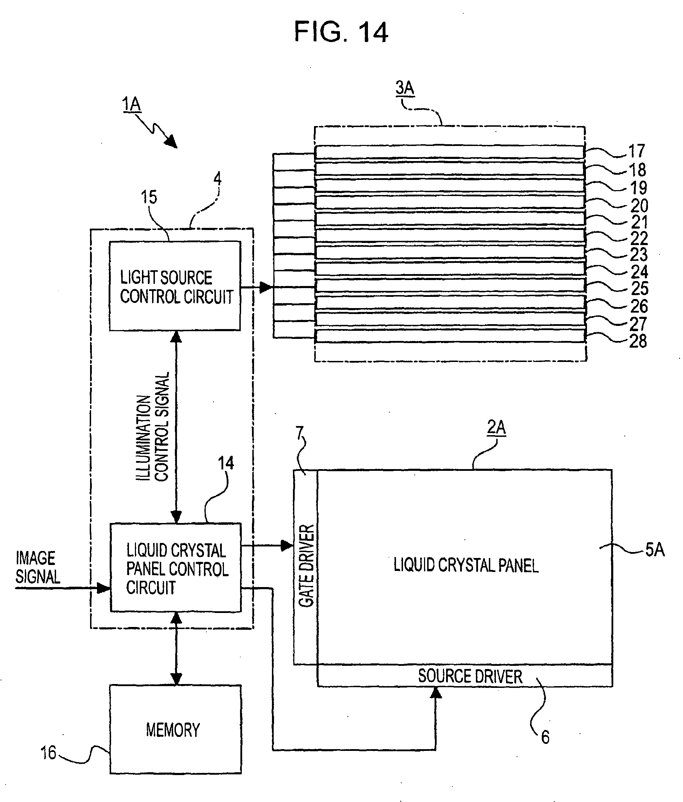

As shown in Fig. 14, the liquid crystal display device 1A includes a display unit 2A, a backlight 3A, and a control unit 4.

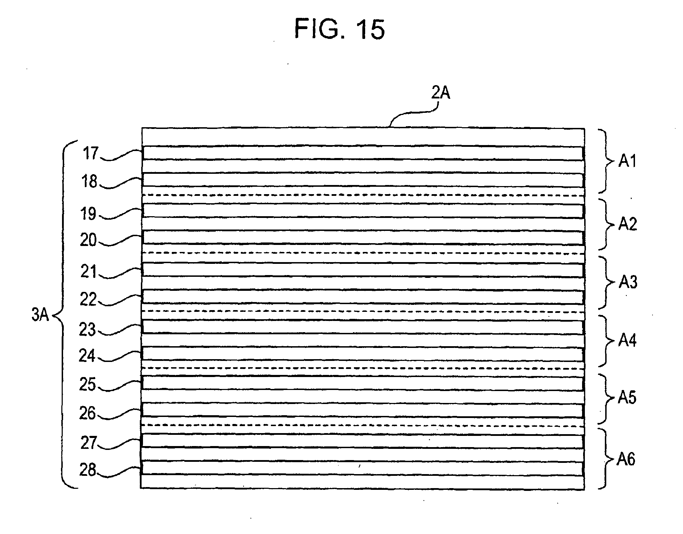

The display unit 2A includes a liquid crystal panel 5A, a source driver 6, and a gate driver 7. The source driver 6 and the gate driver 7 deliver a driving signal to the liquid crystal panel 5A. The display screen of the liquid crystal panel 5A is divided into a plurality of regions; for example, six vertically divided regions A1 to A6 (see Fig. 15).

The backlight 3A includes a plurality of light sources, for example, twelve light sources 17 to 28. A pair of the two adjacent light sources of the twelve light sources 17 to 28 is disposed immediately behind each of the six regions A1 to A6 of the display screen. Each of the light sources 17 to 28 includes a plurality of horizontally arranged light emitting elements (e.g., light emitting diodes).

Like the backlight 3, the structure of the backlight 3A is not limited to the structure that includes only the vertically divided and arranged light sources 17 to 28. Alternatively, the backlight 3A may include only the horizontally divided and arranged light sources. In addition, the backlight 3A may include vertically and horizontally divided and arranged light sources.

The light source control circuit 15 controls each of the light sources 17 to 28 (see Fig. 14). When the liquid crystal panel control circuit 14 receives an image signal, the liquid crystal panel control circuit 14 inputs an illumination control signal for each of the light sources 17 to 28 into the light source control circuit 15 so that the emission luminance of the light sources 17 to 28 are independently set at one field cycle.

In the liquid crystal display device 1A, the emission luminance is controlled for the two light sources disposed for each of the regions A1 to A6 as one unit. That is, the light source control circuit 15 controls the two light sources disposed for each of the regions A1 to A6 so that each of the two light sources is set to the same emission luminance level at the same time.

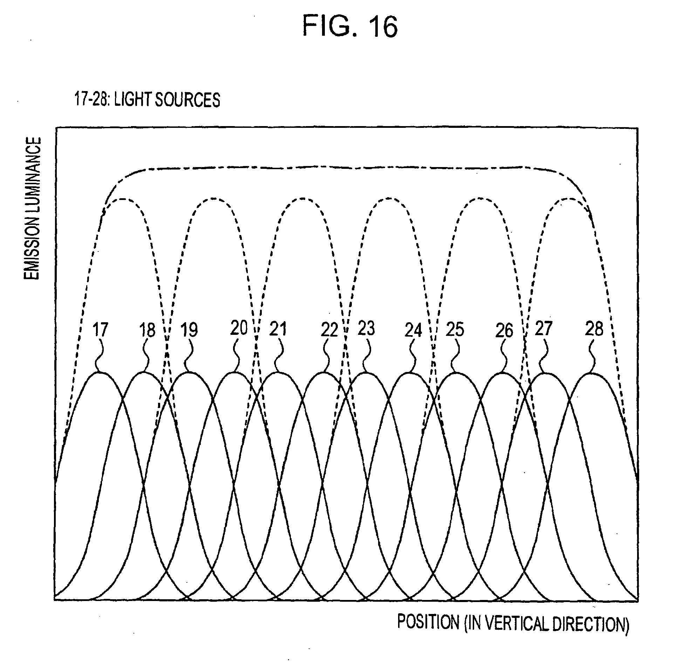

Fig. 16 illustrates an example of emission luminance of the light sources 17 to 28. In Fig. 16, the abscissa represents the vertical position in the display screen and the ordinate represents the emission luminance. Each of the light sources 17 to 28 is illuminated substantially at its maximum uniform luminance level.

In Fig. 16, the data represented by solid lines indicate emission luminance of the light sources 17 to 28. Here, the effect of light reflected off either end of the display screen in the vertical direction (i.e., the ends of the light sources 17 and 28) is not taken into account in these data. The data represented by dotted lines indicate emission luminance of the pairs of two light sources in the regions A1 to A6. The data represented by a dashed line indicates the total emission luminance of the light sources 17 to 28 at a location in the vertical direction. The total emission luminance at any point in the vertical direction is set to substantially the same with the exception of the total emission luminance at either end of the display screen in the vertical direction.

As described above, when the light sources 17 to 28 are illuminated substantially at the uniform intensity level, the total emission luminance decreases at either end of the display screen in the vertical direction. However, at either end of the display screen in the vertical direction, the emission luminance of the light sources 17 and 18 increases due to the effect of reflecting light. Accordingly, like the liquid crystal display device 1, in the liquid crystal display device 1A, the decrease in the total emission luminance is mitigated at either end of the display screen in the vertical direction.

In addition, like the liquid crystal display device 1, in the liquid crystal display device 1A, in order to avoid the decrease in the total emission luminance at either end of the display screen in the vertical direction as much as possible, the maximum emission luminance of the light sources 17 and 28, which are located at either end of the display screen in the vertical direction, may be increased compared with that of the other light sources 18 to 27.

Furthermore, like the liquid crystal display device 1, in order to completely avoid the decrease in the total emission luminance at either end of the display screen in the vertical direction, the area that does not include the either end of the display screen in the vertical direction may be defined as an image displayable area.

Like the liquid crystal display device 1, the liquid crystal display device 1A does not include a partition that prevents light emitted from each of the light sources 17 to 28 from reaching regions other than the region immediately in front of the light source.

Accordingly, in the liquid crystal display device 1A, light emitted from each of the light sources 17 to 28 reaches the region other than the region immediately at the front of the light source. Therefore, the light emitted from each of the light sources 17 to 28 illuminates not only one of the regions A1 to A6 immediately in front of the light source, but also the other regions.

In the liquid crystal display device 1A, the contribution levels of the emission luminance of each of the light sources 17 to 28 to the regions A1 to A6 are also measured in advance and are stored in the memory 16. These measurement values serve as data of the contribution ratio to the luminance.

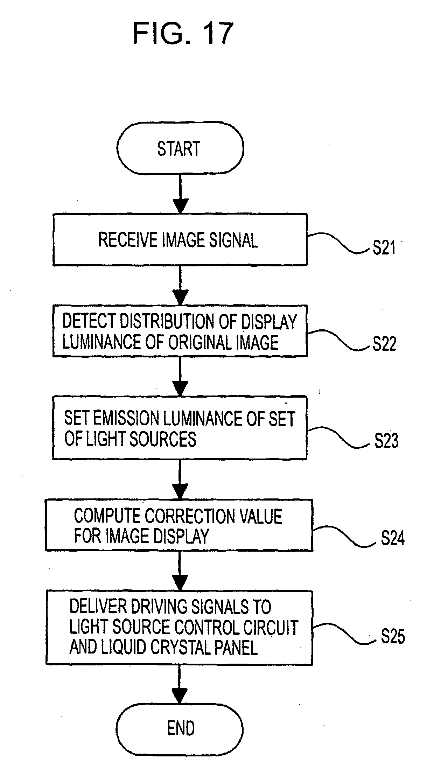

The control process of the screen display is now herein described with reference to a flow chart shown in Fig. 17. This process is executed by the liquid crystal panel control circuit 14 and the light source control circuit 15 of the control unit 4 every time a one-field image signal is input to the liquid crystal panel control circuit 14.

Upon receiving a one-field image signal (step S21), the liquid crystal panel control circuit 14 detects the distribution of display luminance of one image (original image) generated from the input image signal (step S22). The processes at steps S21 and S22 are similar to the processes at steps S1 and S2 of the liquid crystal display device 1 (see Fig. 6).

On the basis of the detected distribution of display luminance, the display luminance is set for each of the light sources 17 to 28 of the backlight 3A (step S23). Here, the setting of the display luminance is carried out for each pair of adjacent light sources. Accordingly, the same value is set for the display luminance of the light sources 17 and 18 disposed so as to correspond to the region A1, the display luminance of the light sources 19 and 20 disposed so as to correspond to the region A2, the display luminance of the light sources 21 and 22 disposed so as to correspond to the region A3, the display luminance of the light sources 23 and 24 disposed so as to correspond to the region A4, the display luminance of the light sources 25 and 26 disposed so as to correspond to the region A5, and the display luminance of the light sources 27 and 28 disposed so as to correspond to the region A6. This display luminance is set with consideration of the contribution ratios of the emission luminance of each of the light sources 17 to 18 to the display luminance of the regions A1 to A6.

After the emission luminance of each of the light sources 17 to 28 is set as described above, a correction value for each pixel is computed to obtain an optimal display luminance value when the image is displayed on the display screen of the liquid crystal panel 5A (step S24). The process at step S24 is similar to the process at step S4 of the liquid crystal display device 1 (see Fig. 6). To compute this correction value, either data of the display luminance characteristic f shown in Fig. 8 or data of the display luminance characteristic f' shown in Fig. 12 may be used.

Subsequently, the light source control circuit 15 delivers light emission driving signals in accordance with the emission luminance of the light sources 17 to 28 set at step S23 to the light sources 17 to 28, respectively. Thus, the light sources 17 to 28 emit light at the set emission luminance levels. At the same time, the liquid crystal panel control circuit 14 delivers display driving signals corrected on the basis of the correction values computed at step S24 to pixels of the liquid crystal panel 5A. Thus, an image of each field is displayed on the display screen (step S25). The process at step S25 is similar to the process at step S5 of the liquid crystal display device 1 (see Fig. 6).

As described above, like the liquid crystal display device 1, in the liquid crystal display device 1A, the emission luminance of each of the light sources 17 to 28 and the aperture ratio of each pixel of the liquid crystal panel 5A are controlled in accordance with the input image signal in each region of the display screen. Consequently, the quality of an image displayed on the liquid crystal panel 5A can be increased while reducing the power consumption.

Moreover, although the emission luminance of the light sources 17 to 28 of the backlight 3A is independently controlled, the light emitted from the light sources 17 to 28 is not partitioned. Accordingly, the structure can be similar to a simple structure of known liquid crystal display devices that do not carry out light amount control.

Furthermore, in the liquid crystal display device 1A, the luminance increases as the number of the light sources increases. In addition, since the emission luminance is controlled for a set of a plurality of light sources, the control process of the emission luminance can remain simple even when the number of light sources increases. Accordingly, the control process of the emission luminance can be facilitated while increasing the emission luminance.

Although the liquid crystal display device 1A that controls the emission luminance of a set of two light sources has been described in particular, other numbers of light sources in the set are also applicable. For example, three or more light sources can be disposed for each region and the emission luminance control may be carried out for a set of these light sources.

In addition, although the liquid crystal display device 1 and the liquid crystal display device 1A that respectively include six and twelve light sources have in particular been described, other numbers of light sources are also applicable. Any plural number of light sources may be applicable.

Furthermore, the number of divided regions is not limited to six. Any number of divided regions is applicable.

The directions described in the foregoing embodiments (i.e., vertical and horizontal directions) are only for description purpose. The present invention is not limited to these directions.

It should be understood by those skilled in the art that various modifications, combinations, sub-combinations and alterations may occur depending on design requirements and other factors insofar as they are within the scope of the appended claims or the equivalents thereof.

**Claims**

**1.** A display apparatus comprising:

a display unit (2; 2A) having a display screen (5; 5 A) divided into a plurality of physical regions (A1-A6) the display unit (2: 2 A) being controlled using an aperture ratio on a pixel-by-pixel basis;

a backlight (3; 3A) for illuminating the back surface of the display unit (2; 2a), the backlight (3: 3A) including a plurality of sets of light sources (8-13; 17-28), each set of light sources (8-13; 17-28) being disposed so as to correspond to one of the physical regions (A1-A6) wherein the light of each set of light sources (8-13: 17-28) also reaches regions other than the region immediately in front of the set of light sources (8-13; 17-28) and thereby contributes to the emission luminance in a region other than the region immediately in front of the set of light sources; and wherein

in advance, for all sets of light sources Y and all physical region X, the contribution ratio Kxy having been measured, the contribution Kxy being the measured contribution of set of light source Y to the luminance of physical region X, and those data being stored in advance in a memory; and

a control unit (4, 14, 15) adapted for

- computing a distribution of display luminance over the physical regions (A1-A6) of the display unit (2; 2A) of one image to be displayed and generated from an image signal input to the control unit (4, 14, 15);
- setting by solving simultaneous equations the emission luminance of each light source (8-13; 17-28) as corresponding to each of the physical regions (A1-A6) on the basis of the computed distribution of the display luminance under consideration of the contribution ratios Kxy of the emission luminance of each set of the light sources as previously stored in the memory (16) so that the emission luminance of the set of light sources is reduced according the display state of the image, and
- computing a correction value for each pixel of the display unit (2; 2A) on the basis of a difference between the set emission luminance of each set of light sources and an optimal display luminance value for the physical regions (A1-A6) of the display screen and delivering a display driving signal generated on the basis of the computed correction value to each pixel so as to control the aperture ratio of the pixel, so that the display luminance required for each display screen location is obtained when the emission luminance of each set of light sources is set.

2. The display apparatus according to claim 1. wherein each set of light sources (17-28) as corresponding to one of the physical regions comprises a plurality of light sources and the control unit (4, 14, 15) is adapted to control the plurality of light sources disposed for each physical region as one unit so that the emission luminance of each light source of the set has the same emission luminance.

3. The display apparatus according to claim 1, wherein for computing the distribution of the display luminance of each physical region of the display unit (2: 2a), the control unit (4, 14, 15) obtains a display luminance characteristic in each physical region (A1-A6) of the display unit (2; 2A) in the range from an emission luminance of zero to an emission luminance of substantially the maximum value of the light sources (8-13) or the light sources (17-28) corresponding to the physical region (A1-A6).

4. A display method for use in a display apparatus (1; 1A), the display apparatus including a display unit (2; 2A) having a display screen (5; 5A) divided into a plurality of physical regions (A1-A6), the display unit (2; 2A) being controlled using an aperture ratio on a pixel-by-pixel basis, and a backlight (3; 3A) for illuminating the back surface of the display unit (2; 2A), the backlight (3; 3A) including a plurality of sets of light sources (8-13; 17-28), each set of light sources (8-13; 17-28) being disposed so as to correspond to one of the physical regions (A1-A6) wherein the light of each set of light sources (8-13; 17-28) also reaches regions other than the region immediately in front of the light sources (8-13; 17-28) and thereby contributes to the emission luminance in the region other than the region immediately in front of the set of light sources;

the method comprising the steps of

- measuring in advance, for all sets of light sources Y and all physical region X, the contribution ratio Kxy, being the measured contribution of set of light source Y to the luminance of physical region X, and storing those data in advance in a memory;
- computing a distribution of display luminance over the physical regions (A1-A6) of the display unit (2; 2a) of one image to be displayed and generated from an image signal input to the control unit (4, 14, 15);
- setting by solving simultaneous equations the emission luminance of each light source (8-13; 17-28) as corresponding to each of the physical regions (A1-A6) on the basis of the computed distribution of the display luminance under consideration of the contribution ratios Kxy of the emission luminance of each set of the light sources as previously stored in the memory (16) so that the emission luminance of the set of light sources is reduced according the display state of the image, and

- computing a correction value for each pixel of the display unit (2; 2a) on the basis of a difference between the set emission luminance of each set of light sources and an optimal display luminance value for the physical regions (A1-A6) of the display screen and delivering a display driving signal generated on the basis of the computed correction value to each pixel so as to control the aperture ratio of the pixel, so that the display luminance required for each display screen location is obtained when the emission luminance of each set of light sources is set.

5. The display method according to claim 4, wherein computing the correction value for each pixel of the display unit (2; 2A) includes correcting the luminance non-uniformity of the display unit (2; 2A) by using pre-stored data about the display luminance characteristic previously obtained as non-uniform correction ratio between a uniform display luminance and an all-white display luminance value for the pixel.

**Patentansprüche**

1. Anzeigevorrichtung, mit:

einer Anzeigeeinheit (2, 2A) mit einem Anzeigeschirm (5; 5A), welcher unterteilt ist in eine Mehrzahl physikalischer Bereiche (A1-A6), wobei die Anzeigeeinheit (2; 2A) gesteuert wird unter Verwendung eines Aperturverhältnisses auf einer Pixel-zu-Pixel-Grundlage,
einer Hinterleuchtungseinrichtung (3, 3A) zum Beleuchten der Rückfläche der Anzeigeeinheit (2, 2A), wobei die Hinterleuchtungseinrichtung (3, 3A) eine Mehrzahl von Sätzen von Lichtquellen (8-13; 17-28) aufweist, wobei jeder Satz von Lichtquellen (8-13; 17-28) derart angeordnet ist, um mit einem der physikalischen Bereiche (A1-A6) zu korrespondieren, wobei das Licht jedes Satzes von Lichtquellen (8-13; 17-28) auch Bereiche außer dem unmittelbar vor dem Satz von Lichtquellen (8-13; 17-28) gelegenen Bereichs erreicht und **dadurch** zur Aussendeluminanz in einem Bereich außer dem Bereich unmittelbar vor dem Satz von Lichtquellen beiträgt, wobei vorab für alle Sätze von Lichtquellen Y und alle physikalischen Bereiche X das Beitragsverhältnis Kxy gemessen wurde, wobei der Beitrag Kxy der gemessene Beitrag des Satzes von Lichtquellen Y zur Luminanz des physikalischen Bereichs X ist, wobei diese Daten vorab in einem Speicher gespeichert werden, und
einer Steuereinheit (4, 14, 15), welche ausgebildet ist

- zum Berechnen einer Verteilung einer Anzeigeluminanz über die physikalischen Bereiche (A1-A6) der Anzeigeeinheit (2, 2A) eines anzuzeigenden Bildes, welches erzeugt wird aus einem Bildsignal, welches der Steuereinheit (4, 14, 15) eingegeben wird,
- zum Einstellen der Aussendeluminanz jeder Lichtquelle (8-13, 17-28), korrespondierend zu jedem der physikalischen Bereiche (A1-A6), durch Lösen simultaner Gleichungen auf der Grundlage der berechneten Verteilung der Anzeigeluminanz unter Berücksichtigung der Beitragsverhältnisse Kxy der Aussendeluminanz jedes Satzes von Lichtquellen, die zuvor im Speicher (16) gespeichert wurden, so dass die Aussendeluminanz des Satzes von Lichtquellen gemäß dem Anzeigestatus des Bildes reduziert wird, und
- zum Berechnen eines Korrekturwerts für jedes Pixel der Anzeigeeinheit (2, 2A) auf der Grundlage einer Differenz zwischen der eingestellten Aussendeluminanz jedes Satzes von Lichtquellen und einem optimalen Anzeigeluminanzwert für die physikalischen Bereiche (A1-A6) des Anzeigeschirms, und zum Liefern eines Anzeigesteuersignals, welches auf der Grundlage des berechneten Korrekturwerts berechnet wurde, an jedes Pixel, um das Aperturverhältnis des Pixels zu steuern, so dass die Anzeigeluminanz, die für jeden Anzeigeschirmort notwendig ist, erhalten wird, wenn die Aussendeluminanz für jeden Satz von Lichtquellen eingestellt wird.

2. Anzeigevorrichtung nach Anspruch 1,
wobei jeder Satz von Lichtquellen (17 - 28) korrespondierend mit einem der physikalischen Bereiche eine Mehrzahl von Lichtquellen aufweist und
wobei die Steuereinheit (4, 14, 15) ausgebildet ist, die Mehrzahl von Lichtquellen, die für jeden physikalischen Bereich angeordnet sind, als eine Einheit zu steuern, so dass die Aussendeluminanz jeder Lichtquelle des Satzes dieselbe Aussendeluminanz besitzt.

3. Anzeigevorrichtung nach Anspruch 1,
wobei zum Berechnen der Verteilung der Anzeigeluminanz für jeden physikalischen Bereich der Anzeigeeinheit (2, 2A) die Steuereinheit (4, 14, 15) eine Anzeigeluminanzcharakteristik in jedem physikalischen Bereich (A1-A6) der Anzeigeeinheit (2, 2A) in dem Bereich von einer Aussendeluminanz mit dem Wert Null bis zu einer Aussendeluminanz von im Wesentlichen dem maximalen Wert der Lichtquelle (8-13) oder der Lichtquellen (17-28) korrespondierend zum physikalischen Bereich (A1-A6) erhält.

4. Anzeigeverfahren zur Verwendung in einer Anzeigevorrichtung (1, 1A),
   wobei die Anzeigevorrichtung aufweist eine Anzeigeeinheit (2, 2A) mit einem Anzeigeschirm (5, 5A), der unterteilt ist in eine Mehrzahl von physikalischen Bereichen (A1-A6), wobei die Anzeigeeinheit (2, 2A) gesteuert wird unter Verwendung eines Aperturverhältnisses auf einer Pixel-zu-Pixel-Grundlage, sowie eine Hinterleuchtungseinrichtung (3, 3A) zum Beleuchten der Rückseite der Anzeigeeinheit (2, 2A), wobei die Hinterleuchtungseinrichtung (3, 3A) eine Mehrzahl von Sätzen von Lichtquellen (8-13, 17-28) aufweist, wobei jeder Satz von Lichtquellen (8-13, 17-28) angeordnet ist, um mit einem der physikalischen Bereiche (A1-A6) zu korrespondieren, wobei das Licht jedes Satzes von Lichtquellen (8-13, 17-28) auch Bereiche außer dem Bereich unmittelbar vor den Lichtquellen (8-13, 17-28) erreicht und **dadurch** beiträgt zur Aussendeluminanz in dem Bereich außer dem Bereich unmittelbar vor dem Satz von Lichtquellen,
   wobei das Verfahren die Schritte aufweist

   - des Messens des Beitragsverhältnisses Kxy vorab für alle Sätze von Lichtquellen Y und alle physikalischen Bereiche X, wobei dies der gemessene Beitrag des Satzes von Lichtquellen Y zur Luminanz des physikalischen Bereichs X ist, und des Speicherns dieser Daten vorab in einem Speicher,
   - des Berechnens einer Verteilung einer Anzeigeluminanz über den physikalischen Bereichen (A1-A6) der Anzeigeeinheit (2, 2A) eines anzuzeigenden Bildes, welches aus einem Bildsignal erzeugt wird, welches der Steuereinheit (4, 14, 15) eingegeben wird,
   - des Einstellens der Aussendeluminanz für jede Lichtquelle (8-13, 17-28), korrespondierend zu jedem der physikalischen Bereiche (A1-A6), durch Lösen simultaner Gleichungen auf der Grundlage der berechneten Verteilung der Anzeigeluminanz unter Berücksichtigung der Beitragsverhältnisse Kxy der Aussendeluminanz für jeden Satz von Lichtquellen, wie sie zuvor im Speicher (16) gespeichert wurden, so dass die Aussendeluminanz für den Satz von Lichtquellen gemäß dem Anzeigestatus des Bildes reduziert wird, und
   - des Berechnens eines Korrekturwerts für jedes Pixel der Anzeigeeinheit (2, 2A) auf der Grundlage einer Differenz zwischen der eingestellten Aussendeluminanz für jeden Satz von Lichtquellen und einem optimalen Anzeigeluminanzwert für die physikalischen Bereiche (A1-A6) für den Anzeigeschirm und des Lieferns eines Anzeigesteuersignals, welches auf der Grundlage des berechneten Korrekturwerts berechnet wurde, an jedes Pixel, um das Aperturverhältnis des Pixels zu steuern, so dass die Anzeigeluminanz, die für jeden Anzeigeschirmort notwendig ist, erhalten wird, wenn die Aussendeluminanz für jeden Satz von Lichtquellen eingestellt wird.

5. Anzeigeverfahren nach Anspruch 4,
   wobei das Berechnen des Korrekturwerts für jedes Pixel der Anzeigeeinheit (2, 2A) aufweist ein Korrigieren der Luminanzungleichförmigkeit der Anzeigeeinheit (2, 2A) durch Verwenden vorab gespeicherter Daten in Bezug auf die Anzeigeluminanzcharakteristik, die zuvor erhalten wurde als ein Nichtgleichförmigkeitskorrekturverhältnis zwischen einer gleichförmigen Anzeigeluminanz und einem Ganzweißanzeigeluminanzwert für das Pixel.

**Revendications**

1. Appareil d'affichage comprenant :

   une unité d'affichage (2 ; 2A) ayant un écran d'affichage (5 ; 5A) divisé en une pluralité de régions physiques (A1-A6), l'unité d'affichage (2 ; 2A) étant commandée en utilisant un rapport d'ouverture sur une base pixel par pixel ;
   un rétroéclairage (3 ; 3A) pour éclairer la surface arrière de l'unité d'affichage (2 ; 2A), le rétroéclairage (3 ; 3A) incluant une pluralité d'ensembles de sources de lumière (8-13 ; 17-28), chaque ensemble de sources de lumière (8-13 ; 17-28) étant disposé de façon à correspondre à une des régions physiques (A1-A6) où la lumière de chaque ensemble de sources de lumière (8-13 ; 17-28) atteint également des régions autres que la région immédiatement devant l'ensemble de sources de lumière (8-13 ; 17-28) et contribue ainsi à la luminance d'émission dans une région autre que la région immédiatement devant l'ensemble de sources de lumière ; et où
   pour tous les ensembles de sources de lumière Y et toute la région physique X, le rapport de contribution Kxy a été mesuré au préalable, la contribution Kxy étant la contribution mesurée de l'ensemble de source de lumière Y sur la luminance de la région physique X, et ces données sont stockées au préalable dans une mémoire ; et une unité de commande (4, 14, 15) adaptée pour

- calculer une distribution de luminance d'affichage sur les régions physiques (A1-A6) de l'unité d'affichage (2 ; 2A) d'une image devant être affichée et générée à partir d'un signal d'image entré dans l'unité de commande (4, 14, 15) ;

- établir en résolvant des équations simultanées, la luminance d'émission de chaque source de lumière (8-13 ; 17-28) comme correspondant à chacune des régions physiques (A1-A6) sur la base de la distribution de la luminance d'affichage calculée en considération des rapports de contribution Kxy de la luminance d'émission de chaque ensemble des sources de lumière tels que stockés précédemment dans la mémoire (16) de sorte que la luminance d'émission de l'ensemble de sources de lumière soit réduit selon l'état d'affichage de l'image, et

- calculer une valeur de correction pour chaque pixel de l'unité d'affichage (2 ; 2A) sur la base d'une différence entre la luminance d'émission établie de chaque ensemble de sources de lumière et une valeur de luminance d'affichage optimale pour les régions physiques (A1-A6) de l'écran d'affichage et délivrer un signal de commande d'affichage généré sur la base de la valeur de correction calculée pour chaque pixel afin de commander le rapport d'ouverture du pixel, de sorte que la luminance d'affichage requise pour chaque emplacement d'écran d'affichage soit obtenue lorsque la luminance d'émission de chaque ensemble de sources de lumière est établie.

2. Appareil d'affichage selon la revendication 1, dans lequel chaque ensemble de sources de lumière (17-28) comme correspondant à une des régions physiques comprend une pluralité de sources de lumière et l'unité de commande (4, 14, 15) est adaptée pour commander la pluralité de sources de lumière disposées pour chaque région physique comme une unité de sorte que la luminance d'émission de chaque source de lumière de l'ensemble ait la même luminance d'émission.

3. Appareil d'affichage selon la revendication 1, dans lequel pour calculer la distribution de la luminance d'affichage de chaque région physique de l'unité d'affichage (2 ; 2A), l'unité de commande (4, 14, 15) obtient une caractéristique de luminance d'affichage dans chaque région physique (A1-A6) de l'unité d'affichage (2 ; 2A) dans la plage allant d'une luminance d'émission de zéro à une luminance d'émission de sensiblement la valeur maximum de la source de lumière (8-13) ou des sources de lumière (17-28) correspondant à la région physique (A1-A6).

4. Procédé d'affichage destiné à être utilisé dans un appareil d'affichage (1 ; 1A), l'appareil d'affichage incluant une unité d'affichage (2 ; 2A) ayant un écran d'affichage (5 ; 5A) divisé en une pluralité de régions physiques (A1-A6), l'unité d'affichage (2 ; 2A) étant commandée en utilisant un rapport d'ouverture sur une base pixel par pixel, et un rétroéclairage (3 ; 3A) pour éclairer la surface arrière de l'unité d'affichage (2 ; 2A), le rétroéclairage (3 ; 3A) incluant une pluralité d'ensembles de sources de lumière (8-13 ; 17-28), chaque ensemble de sources de lumière (8-13 ; 17-28) étant disposé de façon à correspondre à une des régions physiques (A1-A6) où la lumière de chaque ensemble de sources de lumière (8-13 ; 17-28) atteint également des régions autres que la région immédiatement devant les sources de lumière (8-13 ; 17-28) et contribue ainsi à la luminance d'émission dans la région autre que la région immédiatement devant l'ensemble de sources de lumière ;
le procédé comprenant les étapes consistant à

- mesurer au préalable, pour tous les ensembles de sources de lumière Y et toute la région physique X, le rapport de contribution Kxy, qui est la contribution mesurée de l'ensemble de source de lumière Y sur la luminance de la région physique X, et stocker ces données au préalable dans une mémoire ;

- calculer une distribution de luminance d'affichage sur les régions physiques (A1-A6) de l'unité d'affichage (2 ; 2A) d'une image devant être affichée et générée à partir d'un signal d'image entré dans l'unité de commande (4, 14, 15) ;

- établir en résolvant des équations simultanées, la luminance d'émission de chaque source de lumière (8-13 ; 17-28) comme correspondant à chacune des régions physiques (A1-A6) sur la base de la distribution de la luminance d'affichage calculée en considération des rapports de contribution Kxy de la luminance d'émission de chaque ensemble des sources de lumière tels que stockés précédemment dans la mémoire (16) de sorte que la luminance d'émission de l'ensemble de sources de lumière soit réduit selon l'état d'affichage de l'image, et

- calculer une valeur de correction pour chaque pixel de l'unité d'affichage (2 ; 2A) sur la base d'une différence entre la luminance d'émission établie de chaque ensemble de sources de lumière et une valeur de luminance d'affichage optimale pour les régions physiques (A1-A6) de l'écran d'affichage et délivrer un signal de commande d'affichage généré sur la base de la valeur de correction calculée pour chaque pixel afin de commander le rapport d'ouverture du pixel, de sorte que la luminance d'affichage requise pour chaque emplacement d'écran d'affichage soit obtenue lorsque la luminance d'émission de chaque ensemble de sources de lumière est établie.

**5.** Procédé d'affichage selon la revendication 4, dans lequel le calcul de la valeur de correction pour chaque pixel de l'unité d'affichage (2 ; 2A) inclut la correction de la non-uniformité de luminance de l'unité d'affichage (2 ; 2A) en utilisant des données pré-stockées concernant la caractéristique de luminance d'affichage précédemment obtenue comme rapport de correction non uniforme entre une luminance d'affichage uniforme et une valeur de luminance d'affichage toute blanche pour le pixel.

# FIG. 1

# FIG. 2

FIG. 3

8-13: LIGHT SOURCES

EMISSION LUMINANCE

POSITION (IN VERTICAL DIRECTION)

FIG. 4

## FIG. 5

8-13: LIGHT SOURCES

# FIG. 6

START

↓

RECEIVE IMAGE SIGNAL — S1

↓

DETECT DISTRIBUTION OF DISPLAY LUMINANCE OF ORIGINAL IMAGE — S2

↓

SET EMISSION LUMINANCE OF LIGHT SOURCE — S3

↓

COMPUTE CORRECTION VALUE FOR IMAGE DISPLAY — S4

↓

DELIVER DRIVING SIGNALS TO LIGHT SOURCE CONTROL CIRCUIT AND LIQUID CRYSTAL PANEL — S5

↓

END

# FIG. 7

8-13: LIGHT SOURCES

# FIG. 8

## FIG. 9

ALL-WHITE DISPLAY LUMINANCE L_peak

UNIFORM DISPLAY LUMINANCE L_flat

DISPLAY LUMINANCE

0

POSITION

## FIG. 10

UNIFORM DISPLAY LUMINANCE L_flat

NON-UNIFORMITY CORRECTION
COEFFICIENT H (L_flat/L_peak)

DISPLAY LUMINANCE

0

POSITION

LOW ⟵⟶ HIGH
EMISSION LUMINANCE

LOW ⟵⟶ HIGH
APERTURE RATIO

FIG. 11A
RELATED ART

LIGHT SOURCE I

LIGHT SOURCE II

FIRST REGION

SECOND REGION

FIG. 11B
RELATED ART

LIGHT SOURCE I

LIGHT SOURCE II

FIRST REGION

SECOND REGION

FIG. 11C
INVENTION

LIGHT SOURCE I

LIGHT SOURCE II

FIRST REGION

SECOND REGION

EP 1 705 636 B1

# FIG. 12

# FIG. 13

```
          ┌─────────────┐
          │    START    │
          └──────┬──────┘
                 │
                 ▼
    ┌──────────────────────────┐
    │   RECEIVE IMAGE SIGNAL    │ ～ S11
    └─────────────┬────────────┘
                  │
                  ▼
    ┌──────────────────────────┐
    │ DETECT DISTRIBUTION OF    │
    │ DISPLAY LUMINANCE OF      │ ～ S12
    │ ORIGINAL IMAGE            │
    └─────────────┬────────────┘
                  │
                  ▼
    ┌──────────────────────────┐
    │ SET EMISSION LUMINANCE OF │
    │ LIGHT SOURCE              │ ～ S13
    └─────────────┬────────────┘
                  │
                  ▼
    ┌──────────────────────────┐
    │ COMPUTE CORRECTION VALUE  │
    │ FOR IMAGE DISPLAY         │ ～ S14
    └─────────────┬────────────┘
                  │
                  ▼
    ┌──────────────────────────┐
    │  INCREASE DYNAMIC RANGE   │ ～ S15
    └─────────────┬────────────┘
                  │
                  ▼
    ┌──────────────────────────┐
    │ DELIVER DRIVING SIGNALS TO│
    │ LIGHT SOURCE CONTROL      │ ～ S16
    │ CIRCUIT AND LIQUID        │
    │ CRYSTAL PANEL             │
    └─────────────┬────────────┘
                  │
                  ▼
          ┌─────────────┐
          │     END     │
          └─────────────┘
```

EP 1 705 636 B1

# FIG. 14

FIG. 15

# FIG. 16

17-28: LIGHT SOURCES

EMISSION LUMINANCE

17  18  19  20  21  22  23  24  25  26  27  28

POSITION (IN VERTICAL DIRECTION)

# FIG. 17

```
        ┌─────────────┐
        │    START    │
        └─────────────┘
               │
               ▼
  ┌───────────────────────────┐
  │    RECEIVE IMAGE SIGNAL    │────  S21
  └───────────────────────────┘
               │
               ▼
  ┌───────────────────────────┐
  │ DETECT DISTRIBUTION OF DISPLAY│
  │ LUMINANCE OF ORIGINAL IMAGE   │────  S22
  └───────────────────────────┘
               │
               ▼
  ┌───────────────────────────┐
  │ SET EMISSION LUMINANCE OF SET │
  │ OF LIGHT SOURCES              │────  S23
  └───────────────────────────┘
               │
               ▼
  ┌───────────────────────────┐
  │  COMPUTE CORRECTION VALUE  │
  │  FOR IMAGE DISPLAY         │────  S24
  └───────────────────────────┘
               │
               ▼
  ┌───────────────────────────┐
  │ DELIVER DRIVING SIGNALS TO     │
  │ LIGHT SOURCE CONTROL CIRCUIT   │────  S25
  │ AND LIQUID CRYSTAL PANEL       │
  └───────────────────────────┘
               │
               ▼
        ┌─────────────┐
        │     END     │
        └─────────────┘
```

# FIG. 18A

# FIG. 18B

ORIGINAL IMAGE

BACKLIGHT

# FIG. 19

ORIGINAL IMAGE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004212503 A
- US 2002075277 A1
- EP 1777693 A
- US 2005135097 A
- WO 2007054865 A